(19) Europäisches Patentamt
European Patent Office
Office européen des brevets

(11) **EP 1 089 458 B1**

(12) **EUROPEAN PATENT SPECIFICATION**

(45) Date of publication and mention
of the grant of the patent:
**03.10.2007 Bulletin 2007/40**

(51) Int Cl.:
*H04B 7/005* (2006.01)

(21) Application number: **99310301.9**

(22) Date of filing: **21.12.1999**

(54) **Radio telecommunications network**

Funktelekommunikationsnetz

Réseau de télécommunications radio

(84) Designated Contracting States:
**DE GB**

(30) Priority: **01.10.1999 GB 9923207**

(43) Date of publication of application:
**04.04.2001 Bulletin 2001/14**

(73) Proprietor: **Lucent Technologies Inc.**
**Murray Hill, New Jersey 07974-0636 (US)**

(72) Inventors:
• **Freiberg, Lorenz Fred**
**Swindon,**
**Wiltshire SN5 6HG (GB)**
• **Mueckenheim, Jens**
**90411 Nürnberg (DE)**
• **Sadler, Richard John**
**Chippenham, Wiltshire SN14 6YA (GB)**

(74) Representative: **Williams, David John et al**
**Lucent Technologies EUR-IP UK Ltd**
**Unit 18, Core 3**
**Workzone**
**Innova Business Park**
**Electric Avenue**
**Enfield, EN3 7XB (GB)**

(56) References cited:
**WO-A-98/58461**

• **SALONAHO O ET AL: "FLEXIBLE POWER ALLOCATION FOR PHYSICAL CONTROL CHANNEL IN WIDEBAND CDMA" HOUSTON, TX, MAY 16 - 20, 1999,NEW YORK, NY: IEEE,US, vol. CONF. 49, 16 May 1999 (1999-05-16), pages 1455-1458, XP000903286 ISBN: 0-7803-5566-0**
• **ERICSSON: "Amplitude differences between uplink DPCCH and DPDCHs" TSG-RAN WG1#4 (99)347, [Online] 18 - 20 April 1999, XP002167844 Shin-Yokohama, Japan Retrieved from the Internet: <URL:http://www.3gpp.org/ftp/tsg_ran/WG1_R L1/TSGR1_04/Docs/ Pdfs/R1-99347.PDF> [retrieved on 2001-05-18]**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

This invention relates to radio telecommunications networks in which mobile stations communicate with base stations in dedicated physical data channels (DPDCHs) and dedicated physical control channels (DPCCHs), in which transmit power levels in the DPDCHs are set in relation to the transmit power level in the DPCCH by a power offset factor G. An example of such as network is the universal mobile telecommunications systems (UMTS).

In the UMTS example, the DPDCH carries data of the Dedicated Channels (DCH), i.e. either transmitted user traffic or higher layer control information and the DPCCH carries physical layer control information, i.e. pilot symbols, transmission power control (TPC) bits and the transport format indicator (TFCI).

For implementation reasons the $(E_b/N_0)_{ctrl}$ of the DPCCH is adjusted by the power control (PC) procedures (closed loop, outer loop PC). But it is the $E_b/N_0$ of each DCH that determines the Quality of Service (QoS) of each Radio Access Bearer (RAB) and hence $E_b/N_0$ should be controlled by the PC. To solve this issue there is a power offset factor G between DPCCH and DPDCH defined in the 3GPP standards (3GPP UMTS TS 25.213: "Spreading and modulation (FDD)"). Desirably, the value of G should be adjusted in such a way that the ratio of bit energy to background noise density $(E_b/N_0)$, and hence the transmission power requirements, of the DPCCH and the DPDCH, are met without wasting too much power. For example a high data rate DPDCH has to be transmitted with a higher transmission power than the low data rate DPCCH.

Broadly, against this background the invention provides a radio telecommunications network, in which mobile stations communicate with base stations in dedicated physical data channels (DPDCHs) and a dedicated physical control channel (DPCCH), transmit power levels in the DPCCH being controlled by detecting received signal levels in the DPCCH, and transmit power levels in the DPDCHs being set in relation to the transmit power level in the DPCCH for a traffic format combination I, by an amplitude factor G(I) given:

$$G^2(l) \geq \frac{\sum_{i=1}^{n(l)} (E_b/N_0)_i \cdot N_{biti}(l)}{N_{ctrl} \cdot (E_b/N_0)_{ctrl} \cdot m(l)} \text{ in the uplink}$$

$$G^2(l) \geq \frac{\sum_{i=1}^{n(l)} (E_b/N_0)_i \cdot N_{biti}(l)}{N_S(l) \cdot (E_b/N_0)_{ctrl} \cdot m(l)} \text{ in the downlink.}$$

Where $(E_b/N_0)_i$ is the ratio of bit energy to background noise density which is required to achieve a class of service dependent desired bit error rate for data channel i

$N_{biti}$ is the number of bits desired to be sent per frame in channel i
$N_{ctrl}$ is the number of bits per frame in the control channel
$(E_b/N_0)_{ctrl}$ is the ratio of bit energy to background noise density which is required to achieve a desired bit error rate in the control channel
m(I) is the number of multi-codes;
$N_s(I)$ is the total number of symbols per frame in the data channel; and n(I) is the total number of data channels for the traffic format combination I in the DPDCH.

In more detail, the relation between the $(E_b/N_0)_{ctrl}$ of the DPCCH and the $E_b/N_0$ of each DCH varies depending on the currently used mix of data rates of the DCH which is given by the Transport Format Combination (TFC). Detailed investigations reveal that there is a fixed relation between G and TFC. Therefore by properly setting of G, the $E_b/N_0$ of the DCH can be controlled using $(E_b/N_0)_{ctrl}$ of the DPCCH, too.

A preferred embodiment of the invention therefore includes a stored table of values of $(E_b/N_0)_I$ for different combinations of class of service, spreading factor and rate matching levels, the value of $(E_b/N_0)_i$ used to set the transmit power level in the DPDCH being selected according to the spreading factor and the rate matching level resulting from a selected traffic format combination (TFC) /.

Since the values of $E_b/N_0$ together with the TFCS are known, the power offset G could, perhaps, be adjusted by the transmitting side (UE or NodeB) autonomously. However there are some reasons to not allow the transmitting side to calculate the value of G by itself:

If the transmitter has to decide by itself about the used power offset then the $E_b/N_0$ values for all services has to be known. They are not only dependent on the service but also on the despreading and decoding method in the receiver (manufacturer dependent), the environment etc.

For decoding (e.g. normalizing the channel estimate) the receiving side has to know the G, too. If G is calculated autonomously in the transmitter the same value has to be calculated also in the receiver. Due to different calculation methods, e.g. different accuracy there might be different results in transmitter and receiver.

In some situations (e.g. soft Handover) other offsets has to be adjusted. This only can be decided in the network.

If the transmitter can decide the power offset by itself, the algorithm has to be standardized. This limits the flexibility for enhancing of the algorithms.

Most preferably, therefore, the contents of the table is sent to the mobile station and to the base station from a radio network controller (RNC), the mobile station and the base station being operative to calculate the spreading factor and rate matching levels resulting from a desired TFC, to select the $(E_b N_0)$s appropriate to the classes of service, the spreading factor and the rate matching levels, and to calculate the respective amplitude factor G.

Reference is made to the following papers:

3GPP UMTS TS 25.214: "Physical Layer Procedures (FDD)";

O. Salonaho, J. Laakso: "Flexible Power Allocation For Physical Control Channel In Wideband CDMA," IEEE VTC'99; and

Ericsson: "Amplitude differences between uplink DPCCH and DPDCHs," TDoc 3GPP TSG-RAN WG1 347/99

The invention also extends to a method of operating a radio telecommunications network, in which mobile stations communicate with base stations in dedicated physical data channels (DPDCHs) and a dedicated physical control channel (DPCCH), the method comprising controlling transmit power levels in the DPCCH by detecting received signal levels in the DPCCH, and setting transmit power levels in the DPDCHs in relation to the transmit power level in the DPCCH for a traffic format combination I, by an amplitude factor G(I) given:

$$G^2(l) \geq \frac{\sum_{i=1}^{n(l)} (E_b/N_0)_i \cdot N_{biti}(l)}{N_{ctrl} \cdot (E_b/N_0)_{ctrl} \cdot m(l)} \text{ in the uplink}$$

$$G^2(l) \geq \frac{\sum_{i=1}^{n(l)} (E_b/N_0)_i \cdot N_{biti}(l)}{N_S(l) \cdot (E_b/N_0)_{ctrl} \cdot m(l)} \text{ in the downlink.}$$

Where $(E_b/N_0)_l$ is the ratio of bit energy to background noise density which is required to achieve a class of service dependent desired bit error rate for data channel i

$N_{biti}$ is the number of bits desired to be sent per frame in channel i

$N_{ctrl}$ is the number of bits per frame in the control channel

$(E_b/N_0)_{ctrl}$ is the ratio of bit energy to background noise density which is required to achieve a desired bit error rate in the control channel

$m(l)$ is the number of multi-codes;

$N_s(l)$ is the total number of symbols per frame in the data channel; and n(l) is the total number of data channels for the traffic format combination l in the DPDCH.

A preferred embodiment of the invention will now be described, by way of example, with reference to the accompanying drawings, in which:

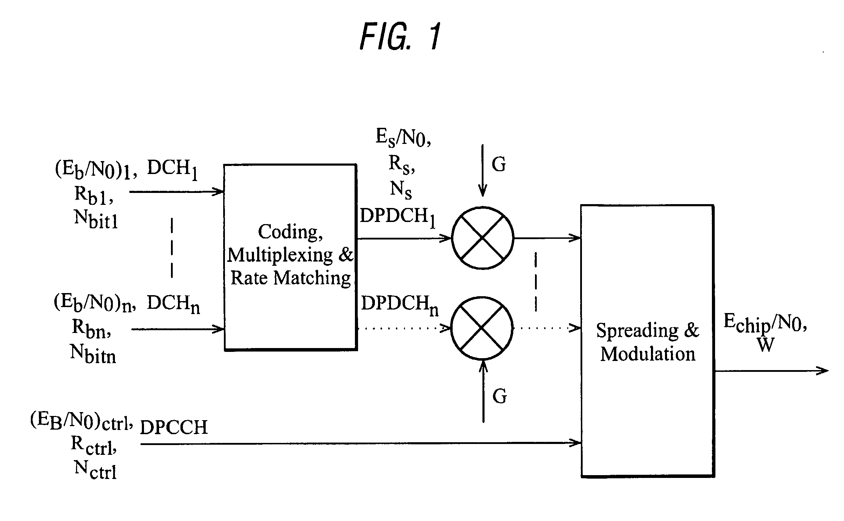

Figure 1 is a block diagram of a UMTS model, transmitter side in a radio telecommunications network embodying the invention; and

Figure 2 shows an overview of an embodiment of the proposed power assignment algorithm.

Broadly the network deals with the problem of assigning the power offset between DPCCH and DPDCH. The problem arises from the usage of power control on the DPCCH whereas the quality that is under control (e.g. BER) is given on the DCH/DPDCH. In this embodiment, the power is adjusted in such a way that the transmission power requirements of the DPCCH and the DPDCH are met without wasting too much power.

An algorithm for assigning the power offsets consists of two main parts:

1. Allocation of the specific G-values to every TFC, i.e. to every combination of class of service, spreading factor and rate matching level resulting from the TFCs. These may be allocated by RRC in the RNC and signalled to transmitting and receiving side (UE/ NodeB) via higher layer signalling. Or alternatively, to save on calculations necessary in the RRC, the table of values of $E_b/N_0$ is stored for each combination of classes of service, spreading factor and rate matching level resulting form every TFC. The contents of the table are transmitted to the transmitting side and the receiving side and the calculation is done there for the particular TFC to be used.

2. Autonomous adjustment of G in PHY regarding the current used TFC in the transmitter. The receiver determines or calculates the G-value from the TFC via TFCI signalling.

This algorithm allows efficient setting of dynamically variable offset values without too much signalling overhead. It is compliant to the currently UMTS standard.

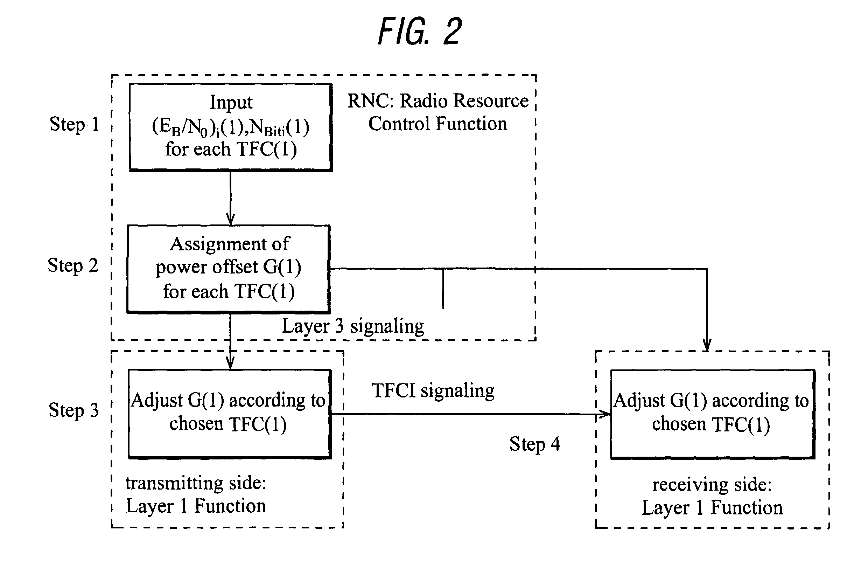

The UMTS physical layer model for the uplink and for the downlink is depicted in **FIG. 2**. The DCH of one user are coded and multiplexed into one or several DPDCH. Additional rate matching is applied to balance the $E_b/N_0$ requirements of different DCH. The DPDCH are weighted by an amplitude factor G, multiplexed with the DPCCH and spread to a chip rate W.

The description of the variables is as follows:

$DCH_i$ is described by $(E_b/N_0)_i$ and data rate $R_{bi}$. The number of bits (transport block set size) is $N_{biti}$. The current data rate is given by $R_{Bi} = N_{biti}/10$ ms.

All DPDCH, have the same $E_s/N_0$ and the same symbol rate $R_S$. The number of symbols is $N_S$. The number of used multi-codes is m.

The DPCCH is described by $(E_B/N_0)_{ctrl}$ and control bit rate $R_{ctrl}$. The number of control bits is $N_{ctrl} = N_{pilot} + N_{TPC} + N_{TFCI}$ (pilot, TPC and TFCI).

The relation between $(E_b/N_0)_i$ of DCH, and $E_s/N_0$ is given by

$$\left(\frac{E_b}{N_0}\right)_i \cdot N_{biti} = \frac{E_S}{N_0} \cdot N_{Si} . \qquad (1)$$

Where $(E_b/N_0)_I$ is the ratio of bit energy to background noise density which is required to achieve a class of service dependent desired bit error rate for data channel i

$N_{biti}$ is the number of bits desired to be sent per frame in channel i

$E_s/N_0$ is the ratio of symbol energy to background noise density

$N_{SI}$ is the number of symbols required for channel after coding and rate matching.

The number of symbols $N_S$ for one DPDCH is calculated by the sum of all $N_{Si}$ weighted by the number of multicodes m

$$N_S = \sum_{i=1}^{n} N_{Si} \Big/ m . \qquad (2)$$

In the uplink the DPCCH is code-multiplexed to the DPDCH. Thus, the relation between $(E_b/N_0)_{ctrl}$ of the DPCCH and $E_S/N_0$ of one DPDCH in the uplink is given by

$$\frac{E_S}{N_0} \cdot N_S = \left(\frac{E_B}{N_0}\right)_{ctrl} \cdot N_{ctrl} \cdot G^2 \qquad (3)$$

where $N_{ctrl}$ is the number of bits per frame in the control channel

$(E_b/N_0)_{ctrl}$ is the ratio of bit energy to background noise density which is required to achieve a desired bit error rate in the control channel, and

$N_s(l)$ is the total number of symbols per frame in the data channel.

If there is no data to send on the DPDCH it is switched off and hence $G \equiv 0$.

From eq. (1) - eq. (3) follows the relation between $(E_B/N_0)_{ctrl}$ and $(E_b/N_0)$, of all DCH in the uplink

$$\left(\frac{E_B}{N_0}\right)_{ctrl} = \frac{\sum_{i=1}^{n}(E_b/N_0)_i \cdot N_{biti}}{N_{ctrl} \cdot G^2 \cdot m} \qquad (4)$$

In the downlink, time-multiplex between DPDCH and DPCCH is used. Hence, the relation between $(E_B/N_0)_{ctrl}$ of the DPCCH and $E_S/N_0$ of one DPDCH in the downlink is given by

$$\frac{E_S}{N_0} = \left(\frac{E_B}{N_0}\right)_{ctrl} \cdot G^2. \qquad (5)$$

From eq. (1), eq. (2) and eq. (5) follows the relation between $(E_B/N_0)_{ctrl}$ and $(E_b/N_0)_i$ of all DCH in the downlink

$$\left(\frac{E_B}{N_0}\right)_{ctrl} = \frac{\sum_{i=1}^{n}(E_b/N_0)_i \cdot N_{biti}}{N_S \cdot G^2 \cdot m} \qquad (6)$$

The power control adjusts the transmission power on the DPCCH and hence $(E_B/N_0)_{ctrl}$. If the power offset factor G between DPDCH and DPCCH is chosen that eq. (4) (uplink) or eq. (6) (downlink) is fulfilled for every combination of $N_{biti}$ (TFCI) the value of $(E_B/N_0)_{ctrl}$ remains constant even in the case of variable data rates without any extra signalling beyond TFCI.

The relation between G and the β-factors mentioned in the standards referred to above is simply $G = \beta_1/\beta_{ctrl}$. (Note: in the present arrangement, all active DPDCHs get the same power offset). The channel with maximum power always has β = 1.0 and the others have β ≤ 1.0. The β-values are quantized into 4 bits, and the quantization steps are given in 3GPP UMTS TS 25.213: "Spreading and modulation (FDD)".

Figure 2 gives an overview of the proposed rate matching algorithm. It consists of two main parts, which are defined as follows:

Radio Resource Control function that is located in the Radio Network Controler (RNC) for both uplink as well as downlink.

Layer 1 functions that are located in the transmitter side, i.e. in the NodeB for the downlink and in the UE for the uplink, and in the receiving side, i.e. the UE for the downlink and the NodeB for the uplink.

The power assignment algorithm is as follows:

Inputs to the algorithm are the required $(E_b/N_0)_i$ for each $DCH_i$ and the number of data bits per data frame $N_{biti}$ (l) of $DCH_i$ for each transport format combination TFC(l). The number of symbols $N_S(l)$ and the number of DPDCH (i.e. multicodes) m(l) is also known. The number of control bits $N_{ctrl}$ is assumed fixed. The $(E_b/N_0)_{ctrl}$ of the DPCCH is determined by the required BER of e.g. the TPC or TFCI bits. It depends on several conditions, e.g. whether the UE is in soft handoff.

The power offsets G(l) for each TFC(l) will be determined. Using eq. (4) and eq. (6) the following assignment formulation can be used:

$$G^2(l) \geq \frac{\sum_{i=1}^{n(l)}(E_b/N_0)_i \cdot N_{biti}(l)}{N_{ctrl} \cdot (E_b/N_0)_{ctrl} \cdot m(l)} \text{ in the uplink}$$

$$G^2(l) \geq \frac{\sum_{i=1}^{n(l)}(E_b/N_0)_i \cdot N_{biti}(l)}{N_S(l) \cdot (E_b/N_0)_{ctrl} \cdot m(l)} \text{ in the downlink.}$$

Either a complete set of values of G for all TFCs can be sent to the mobile station and the RNC or a complete table of $E_b/N_0$ for all TFCs can be sent. Discrete values of G(l) may be used to save implementation effort and transmission overhead. Then the next higher valid G(l) must be chosen, which implies a slight waste of transmission power. Equal G(l) might be related to different TFC(l).

If there are fewer values of G(l) allowed than the number of TFC(l), the procedure is as follows: At first the TFC(l) that have similar G(l) are grouped into the same group. The number of groups equals or is less than the number of allowed G-values. Then the highest G(l) is taken and connected to the group of TFC. Depending on the number of allowed G(l) there is a higher waste of transmission power.

The calculated G(l) or table of $E_b/N_0$ will be transmitted to both the transmitting and the receiving side together with the TFC(l) using higher layer signalling. From this point, there is a fixed relation between the TFC(l) and the G(l).

At the transmitting side the physical layer adjusts autonomously the power offset G(l) that is related to the chosen TFC(l) for transmission. The β-factor can be used, but the algorithm is not limited to it. The exact method depends on the implementation. The TFC(l) is coded into the transport format combination indicator TFCI that will be transmitted on the DPCCH to the receiving side.

From the received TFCI the physical layer in the receiver knows the TFC(l) of the data frame that is currently used. Because inner loop power control adjusts the transmission power in such a way that $(E_b/N_0)_{ctrl}$ of the DPCCH remains constant the TFCI can be properly decoded even in case of changing the data rate (and TFC) of the DCHs. The TFC information will normally be used to decode and demultiplex the data blocks of the DCH currently in use. Moreover, in the embodiment, the receiver knows implicitly G(l) from TFC(l) and hence can use this parameter for detection of the transmitted data (e.g. normalizing the channel estimate).

Variations in the environment, e.g. due to soft handover, changes the value of $(E_b/N_0)_{ctrl}$ of the DPCCH. Variations of the user behaviour, e.g. changing the TFCS due to RAB procedures changes the values of $(E_b/N_0)_i$ and/or $N_{biti}(l)$ of $DCH_i$ for each TFC(l). Then, the RNC calculates new values G(l) and send them to both, the transmitting and receiving side again via higher layer signalling.

The power offset assignment algorithm solves the problem of adjusting the power offset between DPCCH and DPDCH. It has the following properties:

It consists of two main parts: 1. Allocation of the specific G-values to every TFC in the RNC and signalling them to transmitting and receiving side via higher layer signalling. 2. Autonomously adjusting of G regarding the current used TFC in the transmitter. The receiver determines the G-value from the TFC via TFCI signalling.

Transmission of the G-values is only necessary for initialisation, e.g. when connection setup or reconfiguration. During normal transmission the adjusting is done regarding the current assigned TFC. Hence no additional signalling beyond TFCI is necessary.

It can be used for adjusting G in the uplink and in the downlink.

Different power offset values for Pilot, TPC and TFCI can be supported by handling them as separate channels with $N_{ctrl1}=N_{pilot}$, $N_{ctrl2}=N_{TPC}$ and $N_{ctrl3}=N_{TFCI}$.

The algorithm supports the usage of limited numbers of G-values, e.g. due to quantization or reduced signalling overhead.

## Claims

1.  A radio telecommunications network, in which mobile stations communicate with base stations in dedicated physical data channels (DPDCHs) and a dedicated physical control channel (DPCCH), transmit power levels in the DPCCH being controlled by detecting received signal levels in the DPCCH, and transmit power levels in the DPDCHs being set in relation to the transmit power level in the DPCCH; **characterized in that** for a traffic format combination I an amplitude factor G(l) is given by:

$$G^2(l) \geq \frac{\sum_{i=1}^{n(l)}(E_b/N_0)_i \cdot N_{biti}(l)}{N_{ctrl} \cdot (E_b/N_0)_{ctrl} \cdot m(l)} \text{ in the uplink}$$

$$G^2(l) \geq \frac{\sum_{i=1}^{n(l)} (E_b/N_0)_i \cdot N_{biti}(l)}{N_S(l) \cdot (E_b/N_0)_{ctrl} \cdot m(l)} \text{ in the downlink;}$$

where $(E_b/N_0)_i$ is the ratio of bit energy to background noise density which is required to achieve a class of service dependent desired bit error rate for data channel i

$N_{biti}$ is the number of bits desired to be sent per frame in channel i

$N_{ctrl}$ is the number of bits per frame in the control channel

$(E_b/N_0)_{ctrl}$ is the ratio of bit energy to background noise density which is required to achieve a desired bit error rate in the control channel

m(l) is the number of multi-codes;

$N_s(l)$ is the total number of symbols per frame in the data channel; and

$n(\ell)$ is the total number of data channels for the traffic format combination $\ell$ in the DPDCCH.

2. A radio telecommunications network, as claimed in claim 1, including a stored table of values of $(E_b/N_0)_i$ for different combinations of class of service, spreading factor and rate matching levels, the value of $(E_b/N_0)_i$ used to set the transmit power level in the DPDCH being selected according to the spreading factor and the rate matching level resulting from a selected traffic format combination (TFC) *l*.

3. A radio telecommunications network as claimed in claim 2, wherein the contents of the table is sent to the mobile station and to the base station from a radio network controller (RNC), the mobile station and the base station being operative to calculate the spreading factor and rate matching levels resulting from a desired TFC, to select the $(E_b N_0)$s appropriate to the classes of service, the spreading factor and the rate matching levels, and to calculate the respective amplitude factor G.

4. A radio telecommunications network as claimed in claim 2 or 3, wherein there are fewer discrete values of G(l) allowed than the number of TFC(l), TFC(l) that have similar G(l) being grouped into the same group, the number of groups being equal to or is less than the number of allowed G-values, the highest G(l) in the group being taken and connected to the group of TFC.

5. A method of operating a radio telecommunications network, in which mobile stations communicate with base stations in dedicated physical data channels (DPDCHs) and a dedicated physical control channel (DPCCH), the method comprising controlling transmit power levels in the DPCCH by detecting received signal levels in the DPCCH, and setting transmit power levels in the DPDCHs in relation to the transmit power level in the DPCCH **characterized in that** for a traffic format combination I an amplitude factor G(I) is given by:

$$G^2(l) \geq \frac{\sum_{i=1}^{n(l)} (E_b/N_0)_i \cdot N_{biti}(l)}{N_{ctrl} \cdot (E_b/N_0)_{ctrl} \cdot m(l)} \text{ in the uplink}$$

$$G^2(l) \geq \frac{\sum_{i=1}^{n(l)} (E_b/N_0)_i \cdot N_{biti}(l)}{N_S(l) \cdot (E_b/N_0)_{ctrl} \cdot m(l)} \text{ in the downlink;}$$

where $(E_b/N_0)_i$ is the ratio of bit energy to background noise density which is required to achieve a class of service dependent desired bit error rate for data channel i

$N_{biti}$ is the number of bits desired to be sent per frame in channel i

$N_{ctrl}$ is the number of bits per frame in the control channel

$(E_b/N_0)_{ctrl}$ is the ratio of bit energy to background noise density which is required to achieve a desired bit error rate in the control channel

m(l) is the number of multi-codes;

$N_s(l)$ is the total number of symbols per frame in the data channel; and

n(l) is the total number of data channels for the traffic format combination I in the DPDCH.

6. A method as claimed in claim 5, including storing a table of values of $(E_b/N_0)_i$ for different combinations of class of service, spreading factor and rate matching levels, and selecting the value of $(E_b/N_0)_i$ used to set the transmit power level in the DPDCH according to the spreading factor and the rate matching level resulting from a selected traffic format combination (TFC) *l*.

**7.** A method as claimed in claim 6, wherein the contents of the table is sent to the mobile station and to the base station from a radio network controller (RNC), and the mobile station and the base station operate to calculate the spreading factor and rate matching levels resulting from a desired TFC, to select the $(E_bN_0)$s appropriate to the classes of service, the spreading factor and the rate matching levels, and to calculate the respective amplitude factor G.

**8.** A method as claimed in claim 6 or 7, wherein there are fewer discrete values of G(I) allowed than the number of TFC(I), TFC(I) that have similar G(I) being grouped into the same group, the number of groups being equal to or is less than the number of allowed G-values, the highest G(I) in the group being taken and connected to the group of TFC.

## Patentansprüche

**1.** Funktelekommunikationsnetz, in dem Mobilstationen in fest zugeordneten physischen Datenkanälen DPDCH und einem fest zugeordneten physischen Steuerkanal DPCCH mit Basisstationen kommunizieren, wobei Sendeleistungspegel in dem DPCCH durch Detektieren von Empfangssignalpegeln in dem DPCCH geregelt werden und Sendeleistungspegel in den DPDCH in Beziehung zu dem Sendeleistungspegel in dem DPCCH eingestellt werden; **dadurch gekennzeichnet, daß** für eine Verkehrsformatkombination I ein Amplitudenfaktor G(I) folgendermaßen gegeben wird:

$$G^2(l) \geq \frac{\sum_{i=1}^{m(l)} (E_b/N_0)_i \cdot N_{biti}(l)}{N_{ctrl} \cdot (E_b/N_0)_{ctrl} \cdot m(l)} \text{ in der Aufwärtsstrecke}$$

$$G^2(l) \geq \frac{\sum_{i=1}^{n(l)} (E_b/N_0)_i \cdot N_{biti}(l)}{N_S(l) \cdot (E_b/N_0)_{ctrl} \cdot m(l)} \text{ in der Abwärtsstrecke;}$$

wobei $(E_b/N_0)_i$ das Verhältnis von Bitenergie zu Grundrauschdichte ist, das erforderlich ist, um abhängig von der gewünschten Bitrate für den Datenkanal i eine Dienstklasse zu erzielen,
$N_{biti}$ die Anzahl der Bit ist, die pro Rahmen in Kanal i gesendet werden soll,
$N_{ctrl}$ die Anzahl der Bit in dem Steuerkanal ist,
$(E_b/N_0)_{ctrl}$ das Verhältnis von Bitenergie zu Grundrauschdichte ist, das erforderlich ist, um eine gewünschte Bitfehlerrate in dem Steuerkanal zu erzielen,
m(I) die Anzahl der Multicodes ist,
$N_s(l)$ die Gesamtzahl der Symbole pro Rahmen in dem Datenkanal ist; und
n(I) die Gesamtzahl der Datenkanäle für die Verkehrsformatkombination 1 in dem DPDCH ist.

**2.** Funktelekommunikationsnetz nach Anspruch 1 mit einer gespeicherten Tabelle von Werten von $(E_b/N_0)_i$ für verschiedene Kombinationen von Dienstklasse, Spreizfaktor und Ratenanpassungswerten, wobei mit dem Wert von $(E_b/N_0)_i$ der Sendeleistungspegel in dem DPDCH eingestellt wird, der gemäß dem Spreizfaktor und dem Ratenanpassungswert ausgewählt wird, der sich aus einer gewählten Verkehrsformatkombination TFC *l* ergibt.

**3.** Funktelekommunikationsnetz nach Anspruch 2, wobei der Inhalt der Tabelle von einer Funknetzsteuerung RNC zu der Mobilstation und der Basisstation gesendet wird, wobei die Mobilstation und die Basisstation wirken, um den Spreizfaktor und die Ratenanpassungswerte, die sich aus einer gewünschten TFC ergeben zu berechnen, um die für die Dienstklassen, den Spreizfaktor und die Ratenanpassungswerte angemessenen $(E_b/N_0)$ auszuwählen, und um den jeweiligen Amplitudenfaktor G zu berechnen.

**4.** Funktelekommunikationsnetz nach Anspruch 2 oder 3, wobei weniger diskrete Werte von G(I) als die Anzahl der TFC(I) erlaubt sind, wobei TFC(I) mit ähnlichem G(I) in derselben Gruppe gruppiert werden, wobei die Anzahl der Gruppen kleiner oder gleich der Anzahl erlaubter G-Werte ist, wobei das höchste G(I) in der Gruppe genommen und mit der Gruppe von TFC verbunden wird.

**5.** Verfahren zum Betrieb eines Funktelekommunikationsnetzes, in dem Mobilstationen in fest zugeordneten physischen Datenkanälen DPDCH und einem fest zugeordneten physischen Steuerkanal DPCCH mit Basisstationen kommunizieren, mit den folgenden Schritten: Steuern von Sendeleistungspegel in dem DPCCH durch Detektieren von Empfangssignalpegeln in dem DPCCH und Einstellen von Sendeleistungspegeln in den DPDCH in Beziehung zu dem Sendeleistungspegel in dem DPCCH; **dadurch gekennzeichnet, daß** für eine Verkehrsformatkombination 1 ein Amplitudenfaktor G(l) folgendermaßen gegeben wird:

$$G^2(l) \geq \frac{\sum_{i=1}^{m(l)}(E_b/N_0)_i \cdot N_{biti}(l)}{N_{ctrl} \cdot (E_b/N_0)_{ctrl} \cdot m(l)} \quad \text{in der Aufwärtsstrecke}$$

$$G^2(l) \geq \frac{\sum_{i=1}^{n(l)}(E_b/N_0)_i \cdot N_{biti}(l)}{N_S(l) \cdot (E_b/N_0)_{ctrl} \cdot m(l)} \quad \text{in der Abwärtsstrecke;}$$

wobei $(E_b/N_0)_i$ das Verhältnis von Bitenergie zu Grundrauschdichte ist, das erforderlich ist, um abhängig von der gewünschten Bitrate für den Datenkanal i eine Dienstklasse zu erzielen,
$N_{biti}$ die Anzahl der Bit ist, die pro Rahmen in Kanal i gesendet werden soll,
$N_{ctrl}$ die Anzahl der Bit in dem Steuerkanal ist,
$(E_b/N_0)_{ctrl}$ das Verhältnis von Bitenergie zu Grundrauschdichte ist, das erforderlich ist, um eine gewünschte Bitfehlerrate in dem Steuerkanal zu erzielen,
m(l) die Anzahl der Multicodes ist,
$N_s(l)$ die Gesamtzahl der Symbole pro Rahmen in dem Datenkanal ist; und
n(l) die Gesamtzahl der Datenkanäle für die Verkehrsformatkombination 1 in dem DPDCH ist.

**6.** Verfahren nach Anspruch 5, umfassend das Speichern einer Tabelle von Werten von $(E_b/N_0)_i$ für verschiedene Kombinationen von Dienstklasse, Spreizfaktor und Ratenanpassungswerten und das Auswählen des zum Einstellen des Sendeleistungspegels in dem DPDCH verwendeten Werts von $(E_b/N_0)_i$ gemäß dem Spreizfaktor und dem Ratenanpassungswert, der sich aus einer gewählten Verkehrsformatkombination TFC *l* ergibt.

**7.** Verfahren nach Anspruch 6, wobei der Inhalt der Tabelle von einer Funknetzsteuerung RNC zu der Mobilstation und der Basisstation gesendet wird, wobei die Mobilstation und die Basisstation wirken, um den Spreizfaktor und die Ratenanpassungswerte, die sich aus einer gewünschten TFC ergeben zu berechnen, um die für die Dienstklassen, den Spreizfaktor und die Ratenanpassungswerte angemessenen $(E_b/N_0)$ auszuwählen, und um den jeweiligen Amplitudenfaktor G zu berechnen.

**8.** Verfahren nach Anspruch 6 oder 7, wobei weniger diskrete Werte von G(l) als die Anzahl der TFC(l) erlaubt sind, wobei TFC(l) mit ähnlichem G(l) in derselben Gruppe gruppiert werden, wobei die Anzahl der Gruppen kleiner oder gleich der Anzahl erlaubter G-Werte ist, wobei das höchste G(l) in der Gruppe genommen und mit der Gruppe von TFC verbunden wird.

**Revendications**

**1.** Réseau de télécommunications radio, dans lequel des stations mobiles communiquent avec des stations de base dans des canaux de données physiques dédiés (DPDCH) et un canal de commande physique dédié (DPCCH), les niveaux de puissance d'émission dans le DPCCH étant commandés par la détection de niveaux de signaux reçus dans le DPCCH, et les niveaux de puissance d'émission dans les DPDCH étant établis relativement au niveau de puissance d'émission dans le DPCCH ; **caractérisé en ce que**, pour une combinaison de format de trafic l un facteur d'amplitude G(l) est donné par :

$$G^2(l) \geq \frac{\sum_{t=1}^{n(l)} (E_b / N_0)_i N_{bits}(l)}{N_{comm}.(E_b / N_0)_{comm}.m(l)} \qquad \text{dans la liaison montante}$$

$$G^2(l) \geq \frac{\sum_{t=1}^{n(l)} (E_b / N_0)_i N_{bits}(l)}{N_S(l).(E_b / N_0)_{comm}.m(l)} \qquad \text{dans la liaison descendante ;}$$

où $(E_b/N_0)_i$ est le rapport de l'énergie par bit sur densité du bruit de fond qui est nécessaire pour parvenir à un taux d'erreurs sur les bits souhaité dépendant de la classe de service pour le canal de données i

$N_{bits}$ est le nombre de bits que l'on souhaite envoyer par trame dans le canal i

$N_{comm}$ est le nombre de bits par trame dans le canal de commande

$(E_b/N_0)_{comm}$ est le rapport de l'énergie par bit sur densité du bruit de fond qui est nécessaire pour parvenir à un taux d'erreurs sur les bits souhaité dans le canal de commande

m(l) est le nombre de multi-codes ;

$N_s(l)$ est le nombre total de symboles par trame dans le canal de données ; et

N(l) est le nombre total de canaux de données pour la combinaison de format de trafic l dans le DPDCCH.

2. Réseau de télécommunications radio, selon la revendication 1, comportant une table mémorisée de valeurs de $(E_b/N_0)_i$ pour différentes combinaisons de classe de service, facteur d'étalement et niveaux d'adaptation de débit, la valeur de $(E_b/N_0)_i$ utilisée pour établir le niveau de puissance d'émission dans le DPDCH étant sélectionné selon le facteur d'étalement et au niveau d'adaptation de débit résultant d'une combinaison de format de trafic (TFC) *l* sélectionnée.

3. Réseau de télécommunications radio selon la revendication 2, dans lequel le contenu de la table est envoyé à la station mobile et à la station de base depuis un contrôleur de réseau radio (RNC), la station mobile et la station de base servant à calculer le facteur d'étalement et les niveaux d'adaptation de débit résultant d'une TFC souhaitée, afin de sélectionner les $(E_bN_0)$ appropriés pour les classes de service, le facteur d'étalement et les niveaux d'adaptation de débit, et à calculer le facteur d'amplitude respectif G.

4. Réseau de télécommunications radio selon la revendication 2 ou 3, dans lequel le nombre de valeurs discrètes de G(l) autorisé est inférieur au nombre de TFC(l), les TFC(l) qui ont des G(l) semblables étant groupées dans le même groupe, le nombre de groupes étant égal ou inférieur au nombre de valeurs G autorisées, le G(l) le plus élevé étant utilisé et connecté au groupe de TFC.

5. Procédé d'exploitation d'un réseau de télécommunications radio, dans lequel des stations mobiles communiquent avec des stations de base dans des canaux de données physiques dédiés (DPDCH) et un canal de commande physique dédié (DPCCH), le procédé comprenant la commande de niveaux de puissance d'émission dans le DPCCH en détectant des niveaux de signaux reçus dans le DPCCH, et l'établissement de niveaux de puissance d'émission dans les DPDCH relativement au niveau de puissance d'émission dans le DPCCH ; **caractérisé en ce que**, pour une combinaison de format de trafic l un facteur d'amplitude G(l) est donné par :

$$G^2(l) \geq \frac{\sum_{t=1}^{n(l)} (E_b / N_0)_i N_{bits}(l)}{N_{comm}.(E_b / N_0)_{comm}.m(l)} \qquad \text{dans la liaison montante}$$

$$G^2(l) \geq \frac{\sum_{t=1}^{n(l)} (E_b / N_0)_i N_{bits}(l)}{N_S(l).(E_b / N_0)_{comm}.m(l)} \qquad \text{dans la liaison descendante ;}$$

où $(E_b/N_0)_i$ est le rapport de l'énergie par bit sur densité du bruit de fond qui est nécessaire pour parvenir à un taux d'erreurs sur les bits souhaité dépendant de la classe de service pour le canal de données i

$N_{bits}$ est le nombre de bits que l'on souhaite envoyer par trame dans le canal i

$N_{comm}$ est le nombre de bits par trame dans le canal de commande

$(E_b/N_0)_{comm}$ est le rapport de l'énergie par bit sur densité du bruit de fond qui est nécessaire pour parvenir à un taux d'erreurs sur les bits souhaité dans le canal de commande

m(l) est le nombre de multi-codes ;

$N_s(l)$ est le nombre total de symboles par trame dans le canal de données ; et

N(l) est le nombre total de canaux de données pour la combinaison de format de trafic 1 dans le DPDCH.

6. Procédé selon la revendication 5, comportant la mémorisation d'une table de valeurs de $(E_b/N_0)_i$ pour différentes combinaisons de classe de service, facteur d'étalement et niveaux d'adaptation de débit, la valeur de $(E_b/N_0)_i$ utilisée pour régler le niveau de puissance d'émission dans le DPDCH étant sélectionnée selon le facteur d'étalement et le niveau d'adaptation de débit résultant d'une combinaison de format de trafic (TFC) *l* sélectionnée.

7. Procédé selon la revendication 6, dans lequel le contenu de la table est envoyé à la station mobile et à la station de base depuis un contrôleur de réseau radio (RNC), et la station mobile et la station de base servent à calculer le facteur d'étalement et les niveaux d'adaptation de débit résultant d'un TFC souhaité, afin de sélectionner les $(E_bN_0)$ appropriés pour les classes de service, le facteur d'étalement et les niveaux d'adaptation de débit, et à calculer le facteur d'amplitude respectif G.

8. Procédé selon la revendication 6 ou 7, dans lequel le nombre de valeurs discrètes de G(l) autorisé est inférieur au nombre de TFC(l), les TFC(l) qui ont des G(l) semblables étant groupées dans le même groupe, le nombre de groupes étant égal ou inférieur au nombre de valeurs G autorisées, le G(l) le plus élevé étant utilisé et connecté au groupe de TFC.

## FIG. 1

## FIG. 2

Step 1 — Input $(E_B/N_0)_i(1), N_{Biti}(1)$ for each TFC(1)

RNC: Radio Resource Control Function

Step 2 — Assignment of power offset G(1) for each TFC(1)

Layer 3 signaling

Step 3 — Adjust G(1) according to chosen TFC(1)

TFCI signaling

Step 4

Adjust G(1) according to chosen TFC(1)

transmitting side: Layer 1 Function

receiving side: Layer 1 Function

EP 1 089 458 B1